# EUROPEAN PATENT APPLICATION

(11) **EP 2 943 015 A1**
(43) Date of publication of application: **11.11.2015**
(21) Application number: 14305676.0
(22) Date of filing: 09.05.2014
(51) Int. Cl.: H04W 48/12

(54) **Broadcasting system information relevant to more than one radio cell**

(71) Applicant: ALCATEL LUCENT, 92100 Boulogne-Billancourt (FR)
(72) Inventor: Puddle, Nicola, Swindon, Wiltshire SN5 7DJ (GB); Wong, Shin Horng, Swindon, Wiltshire SN5 7DJ (GB); Brend, Graham, Swindon, Wiltshire SN5 7DJ (GB); Warner, George, Swindon, Wiltshire SN5 7DJ (GB)
(74) Representative: Mills, Julia

(57) **Abstract**

System information blocks that are common to several cells and comprise information indicating the cells to which they apply are disclosed. These system information blocks may be broadcast in all cells to which they apply or in a subset of the cells. Information regarding the system information blocks and their applicability may be transmitted between network nodes.

## Description

### FIELD OF THE INVENTION

The field of the invention relates to wireless telecommunication networks and in particular, to the broadcasting of system information blocks that are applicable to more than one radio cell.

### BACKGROUND

Wireless telecommunication networks are known. In such networks, network connectible devices or user equipment (for example, mobile telephones or tablets) are operable to communicate with base stations provided by network operators. In known wireless telecommunication networks, radio coverage is provided to network connectible devices in geographical areas typically known as cells. Abase station or network node is located in each cell to provide radio coverage. Network connectible devices in each cell are operable to receive information and data from the base station and to transmit data and information to the base station.

Network connectible devices roam through a wireless communications network. Base stations are provided which support areas of radio coverage as described above. A number of those base stations are provided and are distributed geographically in order to provide a wide area of coverage to network connectible devices.

Master information blocks MIBs and system information blocks SIBs are broadcast by network nodes and can be received by any user equipment within the radio cell of the network node. These blocks contain information that is required by user equipment in order for them to connect to and communicate with the network node. These blocks are generally repeatedly broadcast at predetermined times within a time block which has a maximum size. The amount of information that can be broadcast in a SIB and the number of SIBs that are broadcast is therefore limited by the size of the time block in which it can be broadcast.

It would be desirable to be able to decrease the number of SIBs broadcast without unduly decreasing the information received by user equipment.

### SUMMARY

A first aspect of the present invention provides a method comprising: receiving at a network node a common system information block; determining whether said common system information block is applicable to said network node; and if so determining whether said network node is currently configured to broadcast said received common system information block; and if so broadcasting said received common system information block; and if not, not broadcasting said common system information block.

The problem of increasing amounts of information needing to be broadcast in SIBs leading to an increasing number of SIBs is known. An option has been proposed whereby SIBs are scheduled less often and can be stored in a UE for longer than is currently typical. However, this still means that all new UEs entering a cell have to read all the SIBs at some point, and scheduling the SIB broadcasts less often can lead to an increase the time that it takes for a UE to acquire the information broadcast in the SIBs.

For each SIB the area scope of the SIB is currently specified and for most SIBs this is simply the cell, such that on reselection a UE will reacquire the SIBs. However, there are SIBs where the scope is specified as being applicable to the whole PLMN (public land mobile network). For example SIB15.3, for positioning information is valid on a PLMN basis, so the UE doesn't need to store the information afresh from each cell. However, the SIB is scheduled in every cell, thereby impacting the scheduling of all SIBs

The inventors of the present invention recognised that some information that is transmitted in a system information block maybe applicable to more than one radio cell and that where this is the case, it may be advantageous if such common SIBs are not broadcast by all of the network nodes as user equipment that has already received this information from another network node may not need to receive it again. Allowing some network nodes to be configured not to broadcast some common system information blocks, reduces the amount of information that they broadcast freeing up space within the broadcast time window to broadcast other information and/or reducing the time window required for transmitting system information blocks. Furthermore, allowing a user equipment to use a common SIB in a different radio cell to the one it received it in reduces the time delay related to acquiring that SIB.

In some embodiments, said step of determining whether said system information block is applicable to said network node comprises analysing information regarding applicability of said common system information block, said information being at least one of: information contained within said common system information block and information associated with said common system information block and transmitted with said common system information block from a further network node via a link to said network node.

Where a common SIB is applicable to several network nodes, a network node that receives a common SIB needs to know whether it is applicable to it or not. It can determine this from analysing information regarding the applicability of the common SIB which may be contained within the common SIB itself or may be associated with the common SIB where the common SIB has been received from a further network node. In the latter case as the common SIB is transmitted to the receiving network node via a link, perhaps via the backhaul link or perhaps via some other transmission means such as a gateway if the network node is a small cell, as opposed to being broadcast to all devices within an area, additional information relevant to the receiving network node regarding the applicability of that SIB to that network node can be sent with the SIB.

In some embodiments, said information comprises at least one of: a region area code, a local area code, a network control node identifier, and a network node group identifier.

The information which will indicate the applicability of the common system information block or SIB to the network node may be a number of things including a region area code or local area code, indicating that the SIB is applicable to network nodes within this region or area, or it may be a network control node identifier indicating that the SIB is applicable to all network nodes controlled by this network control node. In other embodiments, the information may comprise a network node group identifier identifying a group of network nodes to which the SIB is applicable.

In some embodiments, the method comprises broadcasting a plurality of system information blocks on a first broadcast channel and broadcasting said common system information block on a second broadcast channel.

Although common SIBs maybe broadcast with other system information blocks on a single broadcast channel, in some embodiments a further broadcast channel is provided. This may be mapped onto the S-CCPCH (secondary common control physical channel). Introducing a further broadcast channel provides the opportunity to consider enhancements to the existing SIB procedures as legacy UEs will not be configured to receive these SIBs and thus, any SIB broadcast on this channel does not need to be compatible with legacy UEs. Thus, it may be advantageous to transmit these common SIBs on these broadcast channels as more flexibility can be provided to their configuration as they need not be compatible with legacy user equipment.

In some embodiments, said step of determining whether said network node is currently configured to broadcast said common system information block comprises comparing at least one property of said common system information block with at least one stored property identifying a common system information block as one that should not be broadcast.

Determining whether the network node is configured to broadcast the common system information block can be done in a number of ways such as comparing a property of the common system information block with a stored property which identifies common system information blocks that should not be broadcast. This property may be simply an identifier identifying that particular system information block or it may be an identifier identifying a particular group of system information blocks or it maybe a property of the system information block.

In some embodiments, the method comprises a further step of receiving a control signal from a network control node, said control signal identifying at least one common system information block and providing information indicating that at least one of said identified at least one common system information block should be not broadcast by said network node; in response to said control signal configuring said network node not to broadcast said identified at least one common system information block; said step of determining whether said network node is currently configured to broadcast said received common system information block comprises determining whether said received common system information block corresponds to said at least one common system information block indicated in said control signal.

In some embodiments, the network node will receive a control signal from the network control node and this control signal will indicate which common SIBs are broadcast by particular network nodes and which are not. In this regard, in some cases, the network control node may transmit signals to the various network nodes within its control indicating which SIBs are common SIBs and also indicating to the particular network node whether, if it receives such a common SIB, it should broadcast it or not. In this way, control of which network nodes broadcast the common SIBs and which do not can be centrally controlled by a network control node and furthermore, can be updated by that network control node as required.

In some embodiments, the method comprises, in response to determining that said common system information block is applicable to said network node and should not be broadcast, broadcasting a master information block comprising an indicator identifying said common system information block and indicating that said common system information block is not broadcast by said network node but is applicable to said network node.

In some embodiments, a notification is included in the master information block MIB that the common system information block is not broadcast in that particular cell. A user equipment receiving such an indication will recognise that a previously acquired common SIB should be used. This is just one way of indicating to a user equipment that a previously acquired common SIB is valid for another cell. In other cases, the user equipment will simply determine that a previously acquired common SIB is applicable to particular network nodes and will continue to apply this SIB when within their cells without waiting to receive it again.

In some embodiments, said common system information block comprises information regarding at least one of an area and time of validity of said system information block.

The common system information block may contain information indicating its validity which may relate to an area, perhaps an indication of a number of cell reselections that the SIB is valid across and/or it maybe a time during which that system information block remains valid, the validity of that SIB expiring after that time.

A second aspect of the present invention provides a method comprising transmitting from a network node to at least one further network node via a link a common system information block and further information associated with said common system information block, said further information indicating properties of network nodes to which said common system information block applies.

Where common system information blocks are provided that are valid across a number of cells, then it may be advantageous to transmit the common system information block between the network nodes of those particular cells along with information regarding their applicability to that particular network node. A network node receiving this information and the common system information block can then determine if that common system information block applies to that particular node. It may then determine whether it should broadcast that common system information block or whether although the common system information block relates to it, it should not broadcast it.

In some embodiments, said method further comprises receiving at said network node a transmission from a second network node said transmission being transmitted via a link and being directed to said network node, said transmission comprising: a common system information block; and further information associated with said common system information block indicating properties of network nodes to which said common system information block applies; and determining from said properties whether said common system information block applies to said network node.

A third aspect of the present invention provides a method performed at a user equipment, said method comprising receiving a common system information block from a network node; entering a radio cell of a further network node; analysing validity information within said common system information block; and determining by comparing said validity information with current conditions whether said common system information block is currently valid within said radio cell of said further network node.

A user equipment receiving a common system information block from a network node will apply that system information block within the radio cell of the network node. When it enters a new radio cell, it will analyse validity information that is provided within the common system information block and it can determine from this validity information and from current conditions, whether this common system information block is also valid within the new radio cell. If it is, then the user equipment can maintain the information it has received within the common system information block and continue to use it within the new radio cell. In this way, it need not wait for receipt of this common system information block from the new radio cell. Furthermore, the network node of the new radio cell may be configured not to broadcast this common system information block and yet the user equipment can continue to use the information. In this way, the user equipment's acquisition delay of this information is reduced and the SIB scheduling time of some network nodes is also reduced.

In some embodiments, said validity information comprises at least one of a number of reselections that said common system information block is valid for, a time period said common system information block is valid for, an identifier identifying network nodes for which said common system information block is valid, a list of cells and an identifier of one or more cells.

Determining whether the common system information block is currently valid is done in dependence on validity information within said common SIB which can be one or more of a number of things. It may be a number of reselections that have occurred since the common system information block was acquired. In this regard, the user equipment acquiring the common system information block will read this information and will then set a counter and will count the number of reselections that occur following the acquisition of that common system information block and on moving to a new cell will determine from the counter if the SIB is valid for that cell or not, if it is it will maintain the information within that system information block, if not it will delete it. Alternatively and/ or additionally, there maybe a time period indicated within the common system information block. In this case, a timer will be set on acquiring the common system information block and the information acquired with this common system information block will remain valid until the timer expires. If a timer and number of reselections are both used then the common SIB may expire on expiry of the first of these. Alternatively and/or additionally, the common system information block may include an identifier that identifies network nodes for which it is valid. Such an identifier may be a geographical identifier such as an area code or it may be an identifier of a particular network control node that the network node is within or it may simply be a list of cells or an identifier of one or more of cells. In any case, if the common SIB contains such an identifier then the user equipment will compare this identifier with the identifier of the further network node of the cell that the user equipment has just entered and if they match, it will maintain the information within the common SIB and if not it will discard it. It should be noted that where more than one indication of validity is provided, the validity may expire when the first of these indications is not valid.

A fourth aspect of the present invention provides a method performed by a network control node comprising: transmitting a control signal to at least one network node, said control signal identifying at least one common system information block and providing information indicating that at least one of said identified at least one common system information block should be not broadcast by said network node.

A fifth aspect of the present invention provides a computer program which when executed by a computer is operable to control said computer to perform the method recording to any one of the first, second, third or fourth aspect of the present invention.

A sixth aspect of the present invention provides a network node comprising: a receiver operable to receive a common system information block; control circuitry operable to determine whether said common system information block is applicable to said network node; and if so to determine whether said network node is currently configured to broadcast said received common system information block; and if so to control broadcasting circuitry to broadcast said received common system information block; and if not, to control said broadcasting circuitry not to broadcast said common system information block.

A seventh aspect of the present invention provides a network node comprising: a transmitter operable to transmit to at least one further network node via a link a common system information block and further information associated with said common system information block, said further information indicating properties of network nodes to which said common system information block applies.

In some embodiments, said network node further comprises a receiver operable to receive a transmission from a further network node said transmission being transmitted via a link and being directed to said network node, said transmission comprising: a common system information block; and further information associated with said common system information block indicating properties of network nodes to which said common system information block applies; and control circuitry operable to determine from said properties whether said common system information block applies to said network node.

An eighth aspect of the present invention provides a user equipment comprising: a receiver operable to receive a common system information block from a network node; analysing circuitry operable upon detecting said user equipment entering a radio cell of a further network node, to analyse validity information within said common system information block; and to determine by comparing said validity information with current conditions whether said common system information block is currently valid within said radio cell of said further network node.

A ninth aspect of the present invention provides a network control node comprising: a transmitter operable to transmit a control signal to said network nodes said control signal identifying at least one common system information block and providing information indicating that at least one of said identified at least one common system information block should be not broadcast by said network node.

In some embodiments, said network control node further comprises control circuitry operable to determine which of a plurality of network nodes controlled by said network control node to which a common system information block is applicable should broadcast said common system information block; and which of said network nodes to which said common system information block is applicable should not broadcast said common system information block; said control circuitry being configured to control said transmitter to transmit said common system information block to said network nodes to which it is applicable with a signal indicating whether said network node should broadcast said system information block.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 shows a user equipment within a wireless communication network;
Figure 2 shows a flow diagram illustrating steps in a method performed by a network node according to an embodiment of the present invention;
Figure 3 shows a flow diagram illustrating steps in a method performed by a user equipment according to an embodiment of the present invention;
Figure 4 shows a typical deployment where broadcasting SIBs according to an embodiment of the present invention would be beneficial; and
Figure 5 shows how the common SIB information is exchanged between the network nodes of Figure 4.

### DESCRIPTION OF THE EMBODIMENTS

Before discussing the embodiments in any more detail, first an overview will be provided.

There is an increasing demand for additional SIBs in networks as functionality increases. For instance some network providers also provide local wireless networks such as WiFi networks and would like to offload some users to these networks. Such interworking with such local networks requires new SIBs to broadcast the WLAN (wireless local area network) IDs for example. However, it is also recognised that some SIBs are common to several cells and may not need to be broadcast on a per cell basis. This provides opportunities to enhance the SIB procedures appropriately.

The current application proposes a solution that supports the broadcast of a common SIB, which when received by a UE is applied by said UE to more than one cell and need not be broadcast by all cells to which it applies. In order for this to function well information regarding the applicability of the SIB to particular radio cells is included in the SIB (where the SIB is broadcast) and/or in information transmitted with the SIB where the SIB is transmitted between network nodes via links.

Embodiments typically lend themselves particularly well to particular cell deployment scenarios, for instance to areas where there is only a small number of entry/ exit points e.g. shopping malls, offices, campuses & stadia.

In addition to introducing the concept of a common SIB, a key part of the solution is that a UE should be notified of such a SIB configuration, in order that it can maintain information received from common SIBs across reselections and handovers. Therefore a key part of the solution is the mechanism by which a UE is notified of which cells are applicable for the common SIB, since if nothing is indicated to UEs to allow them to identify the area over which a common SIB applies a UE could incorrectly conclude that a previously acquired common information still applies where this is not the case.

In some embodiments the common SIB is not broadcast by all network nodes to which it applies and this may be controlled by the network control node which may transmit control signals to network nodes indicating the common SIBs, and nodes which should not broadcast these SIBs.

The same SIB type with the same content can in some embodiments be scheduled to be broadcast on both the main broadcast channel BCH and a secondary broadcast channel S-BCH.

The current suggested combination of SIBs on BCH and S- BCH or BCH2 is shown in table 1, where for combination 1 & 2 the SIBX is a SIB created from rel-12, and for combinations 3 -> 5 SIBX can be an existing SIB from any release. The known benefits of providing information as in combinations 3 &4 are that it allows a UE supporting BCH2 to acquire the SIBs earlier (thereby reducing access delay).

**Table 1 showing combinations of SIBs in BCH and BCH2**

| **Combination Id** | **BCH** | **BCH2** | **Comment** |
|---|---|---|---|
| 1 | SIBX | - | |
| 2 | - | SIBX | |
| 3 | SIBX | SIBX | identical information |
| 4 | SIBX | SIBX | different content |
| 5 | SIBX (a-b) | SIBX (c-d) | where a,b,c,d represent different segments |

The introduction of an additional broadcast channel provides the opportunity to consider enhancements to the existing SIB procedures that can further improve the UE acquisition delay. Any optimisation naturally lends itself to the secondary broadcast channel BCH2 (and thereby enhancements to the SIB work item) as this is to be a new standards defined broadcast mechanism, reusing most of BCH characteristics, but also allowing for improvements.

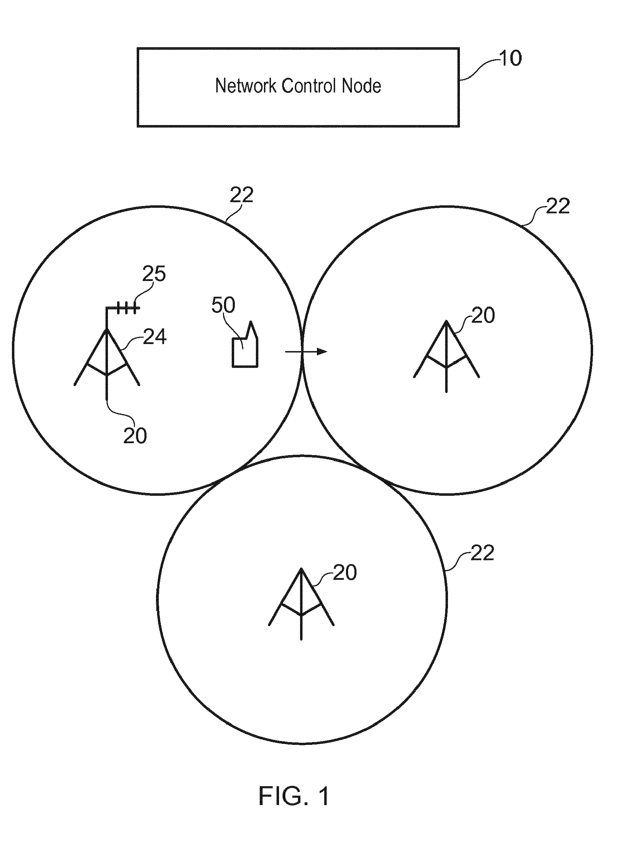

Figure 1 shows a wireless communication network according to an embodiment of the present invention. Figure 1 shows a plurality of network nodes or base stations 20 each providing radio coverage within a radio cell 22. There is also a network control node or core network shown schematically as 10 which provides control signals to the network nodes 20.

Each network node 20 has communication circuitry 24 connected to an antenna 25 which is operable to transmit to and receive signals from user equipment 50 within the radio cell 22 and to broadcast information to all user equipment within that radio cell 22.

Each network node 20 has a backhaul link (not shown) which provides a communication link to the network control node 10 and to other network nodes 20. This backhaul link may be a hardwired link or it may be a wireless link or it may be formed of a combination of the two.

Network control node 10 communicates information regarding common SIBs to network nodes 20 and also transmits control information indicating whether a particular network node should broadcast the common SIB that is applicable to it or not. In response to receiving this control signal, each network node 20 will be operable to either broadcast the common SIB or not to broadcast the common SIB.

User equipment 50 within a radio cell 22 that receives a common SIB will store the information and apply it. On moving to a new radio cell, it will determine from information within the common SIB whether the common SIB is applicable to this new radio cell or not.

In this regard, a common SIB will have information within it regarding its applicability to particular cells and/ or its validity. Thus, a common SIB may be valid for a certain number of reselections and in such a case, UE 50 will determine how many cell reselections have been performed since receiving the common SIB to determine if the common SIB is valid for the new cell or not. Alternatively, the common SIB may be valid for a certain time period, in which case UE 50 will determine whether the SIB is valid for the new cell from the value of a timer that it set on receiving the common SIB. Alternatively, the common SIB maybe applicable to a set of network nodes and the UE will determine if it is applicable to the new cell in dependence upon some property of the network node of the new cell which indicates whether it is one of the network nodes to which the common SIB applies or not. In this regard, it may depend on the local area code or the group area code or on the operator of the network node or on some other property of the network node.

If the user equipment 50 determines that the common SIB is valid for the new radio cell, then it will maintain and apply this common SIB. Thus, the common SIB can be applied on entry to the new cell and the UE does not need to wait to receive it from the network node 20 of the new radio cell 22 before applying it and indeed the network node 20 of the new radio cell 22 may be configured not to broadcast the common SIB although the common SIB applies to it.

In some embodiments, network node 20 may transmit a common SIB that it has received to another network node 20 along with information indicating where this common SIB is applicable. The network node receiving this information can determine whether or not it is applicable to it and can broadcast it or not depending on this information and also depending on its current configuration, that is whether the network control node has configured it to broadcast that particular common SIB or not.

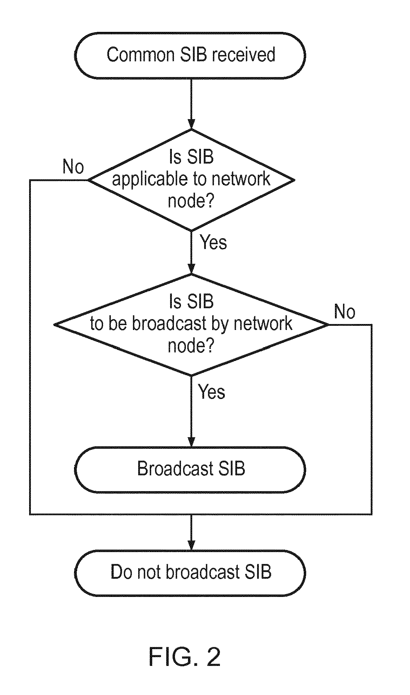

Figure 2 shows steps in a method performed at a network node according to an embodiment of the present invention. Initially, a common SIB is received at a network node. It may be received from a network control node or it may be received from a neighbouring network node and the network node determines if the SIB is applicable to it. If it is not, then it does not broadcast the SIB. If it is applicable, it then determines if the network node is currently configured to broadcast the SIB or not. If it is, then it will broadcast the SIB and if it is not, it will not broadcast the SIB.

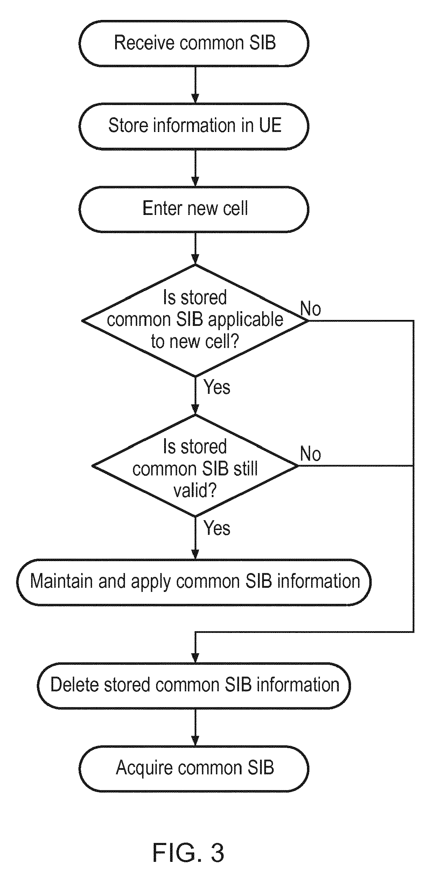

Figure 3 shows steps in a method performed at a user equipment according to an embodiment of the present invention. The user equipment receives the common SIB and stores and applies the information regarding the common SIB. On entering a new cell, it determines whether the stored common SIB is applicable to the new cell and is still valid, if it fails either of these tests, the UE will delete the stored common SIB. If it is applicable and still valid, the UE will maintain and apply the common SIB information. If the stored common SIB is not valid or applicable and is deleted or if later the UE receives a signal cancelling the common SIB (not shown) in response to which the common SIB information is deleted, then the UE will acquire new SIB information from the network node of the radio cell it is in.

In summary, the application proposes a number of different embodiments for informing UEs of common SIBs. In a first embodiment a notification is included in the MIB that common SIBX is not broadcast in the cell and hence a previously acquired common SIB can be used by UE.

In an alternative embodiment the UE is provided with a list of cell IDs in SIBX to which the common SIBX applies.

Another embodiment recognises that particular parts of the cell ID can be used to indicate, additional information to a UE, for instance the X Most Significant Bits could be the RNC (radio network controller) ID. Hence this embodiment uses some bits of the cell ID to indicate which cells the common SIB(s) applies to.

Similarly the UE can be provided with a list of PLMN IDs to which the common SIB(s) applies.

Alternatively the UE can be provided with a list of PSCs (Primary Scrambling Codes) to which the common SIB(s) applies.

It will be appreciated that a further embodiment consists of a combination of any of the embodiments described above.

Upon handover to other cells, in UMTS (universal mobile telecommunication system), the UE has no knowledge of the cell ID of the new serving cell. Therefore an additional part of the proposed solution provides a mechanism to allow the network to cancel/invalidate the common SIB stored information in a UE. Such a method may comprise dedicated signalling to a UE, providing the UE with a new set of common SIB information. It will be appreciated that for a UE in some states it would be necessary to page the UE to indicate that new information is available.

Alternatively the UE itself could discard previously acquired common SIB information, for example upon SRNS (serving radio network subsystem) relocation, or upon timeout or on reselection to a new cell (i.e. different to that stored in the UE for the existing common SIB). In some embodiments, if the UE indicates to the network that it doesn't have valid common SIB information, then the network can provide the information via dedicated signalling (even for the cells which do not broadcast the common SIB).

Since the usage of a common SIB can be applied across a number of cells, the proposed solution also introduces a mechanism to allow network nodes supporting cells to exchange information identifying whether one or more of the nodes have a common SIB configured. Such a message exchange would be via an established interface between the nodes, either directly from one node to the other (should a direct interface be established), or via another network node, for example a gateway if the network nodes are small cells, or via a core network node.

This mechanism would allow one node to send information about a common SIB that it is currently broadcasting to another node, in which case the said another node would also be able to broadcast that common SIB if appropriate. The said another node could, for example, determine whether the information that the first network node is broadcasting in a common SIB is applicable to the said another node based on either information contained in the common SIB or additional information that is sent from the first node to the said another node. Examples of when a common SIB may be applicable to both nodes are; when both nodes are supported by the same RNC, when both nodes are members of the same RAC or LAC (region or local area code), when both nodes support the same CSG (closed subscriber group)- in the case of small cells, etc. It will be appreciated that other similar configuration information can be used by each node to determine whether it can also broadcast a common SIB that is being broadcast by another node.

In addition, the operator can simply configure common SIB information on more than one node based on the operator's knowledge of the network topology and how each node (and the cells supported by each node) relate to one another. This may be done by control signals sent from the RNC or core network.

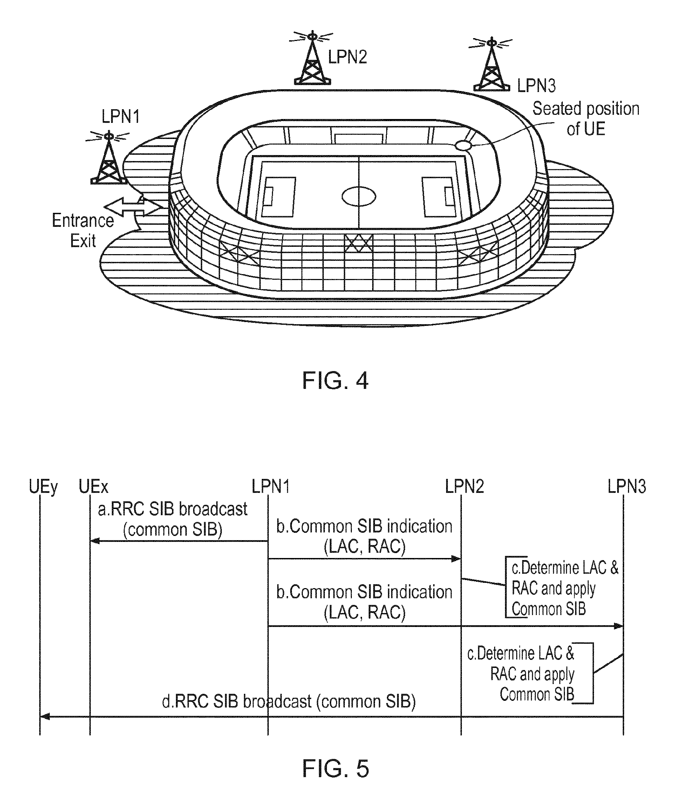

Figure 4 illustrates a typical deployment where broadcasting common SIBs would be beneficial. In the example the Stadium entrance/exit point is covered by LPN1.

The following are the sequence of events:
1. LPN1 broadcasts a common SIB, and includes information in the SIB indicating to which LPNs the common SIB also applies, in this example LPN2 &LPN3. Whereby LPN1 is the only node covering the entry/ exit point of the stadium.
2. A UE (UEx) entering the stadium reads common SIB from LPN1, it should be noted that in this example this would be a slow moving UE (walking pace) and therefore it can be expected that the UE will reselect to LPN1 and therefore read the SIBs. The UE is also notified that the common SIB information applies also to LPN 2 & 3.
3. UE stores common SIB information.
4. When the user is seated in the stadium the UE reselects to LPN3, however since the UE uses the common SIB information from LPN1 it does not need to acquire all the SIB information that LPN3 is broadcasting.
5. Later, when the UE leaves the stadium it will reselect to a cell other than LPN1, 2 or 3 and will hence release the previously acquired common SIB information.

In this example the information in the common SIB is WLAN identifiers, hence the UE would use these WLAN identifiers for network selection when in the stadium.

Additionally Figure 5 illustrates how the common SIB information is exchanged between the LPNs in this example as follows:
a. LPN1 broadcasts the common SIB, which is received by UEx when the UE reselects to LPN1.
b. LPN1 sends information about the common SIB to its neighbour nodes, in this case LPN2, & LPN3. LPN1 also includes information identifying the LAC & RAC with which it is configured.
c. Both LPN2 & LPN3 determine that the LAC & RAC configured for LPN1 is common to them and hence both decide to apply the common SIB.
d. UEy has entered the stadium without reselecting to LPN1, e.g. because it is switched off, however when seated it is switched on and attaches to LPN3, and therefore UEy acquires the common SIB from LPN3. However as described above, since UEx has previously acquired the common SIB from LPN1 it does not need to acquire it from LPN3.

It will be appreciated that typically in such a deployment steps b & c are likely to occur before a UE first acquires the common SIB from LPN1, for example when LPN1 is first switched on and determines its neighbouring nodes.
A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.
It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method comprising:
receiving at a network node a common system information block;
determining whether said common system information block is applicable to said network node; and if so
determining whether said network node is currently configured to broadcast said received common system information block; and if so
broadcasting said received common system information block; and if not,
not broadcasting said common system information block.

2. A method according to claim 1, wherein said step of determining whether said common system information block is applicable to said network node comprises analysing information regarding applicability of said common system information block, said information being at least one of:
information contained within said common system information block ; and
information associated with said common system information block and transmitted with said common system information block from a further network node via a link to said network node.

3. A method according to claim 2, wherein said information comprises at least one of: a region area code, a local area code, a network control node identifier, and a network node group identifier.

4. A method according to any preceding claim, comprising a further step of
receiving a control signal from a network control node, said control signal identifying at least one common system information block and providing information indicating that at least one of said identified at least one common system information block should be not broadcast by said network node;
in response to said control signal configuring said network node to not broadcast said identified at least one common system information block;
said step of determining whether said network node is currently configured to broadcast said received common system information block comprises determining whether said received common system information block corresponds to said at least one common system information block indicated in said control signal.

5. A method according to any preceding claim, said method comprising
in response to determining that said common system information block is applicable to said network node and should not be broadcast, broadcasting a master information block comprising an indicator identifying said common system information block and indicating that said common system information block is not broadcast by said network node but is applicable to said network node.

6. A method according to any preceding claim, wherein said common system information block comprises information regarding at least one of an area and time of validity of said system information block.

7. A method comprising:
transmitting from a network node to at least one further network node via a link a common system information block and further information associated with said common system information block, said further information indicating properties of network nodes to which said common system information block applies.

8. A method performed at a user equipment, said method comprising:
receiving a common system information block from a network node;
entering a radio cell of a further network node;
analysing validity information within said common system information block; and
determining by comparing said validity information with current conditions whether said common system information block is currently valid within said radio cell of said further network node.

9. A method according to claim 8, wherein said validity information comprises at least one of:
a number ofreselections that said common system information block is valid for, a time period said common system information block is valid for, an identifier identifying network nodes for which said common system information block is valid, a list of cells and an identifier of one or more cells.

10. A method performed by a network control node comprising:
transmitting a control signal to at least one network node, said control signal identifying at least one common system information block and providing information indicating that at least one of said identified at least one common system information block should be not broadcast by said network node.

11. A computer program which when executed by a computer is operable to control said computer to perform the method of any one of claims 1 to 10.

12. A network node comprising:
a receiver operable to receive a common system information block;
control circuitry operable to determine whether said common system information block is applicable to said network node; and if so
to determine whether said network node is currently configured to broadcast said received common system information block; and if so
to control broadcasting circuitry to broadcast said received common system information block; and if not,
to control said broadcasting circuitry not to broadcast said common system information block.

13. A network node comprising:
a transmitter operable to transmit to at least one further network node via a link a common system information block and further information associated with said common system information block, said further information indicating properties of network nodes to which said common system information block applies.

14. A user equipment comprising:
a receiver operable to receive a common system information block from a network node;
analysing circuitry operable upon detecting said user equipment entering a radio cell of a further network node, to analyse validity information within said common system information block; and
to determine by comparing said validity information with current conditions whether said common system information block is currently valid within said radio cell of said further network node.

15. A network control node comprising:
a transmitter operable to transmit a control signal to said network nodes said control signal identifying at least one common system information block and providing information indicating that at least one of said identified at least one common system information block should be not broadcast by said network node.
